# EUROPÄISCHE PATENTSCHRIFT

(11) **EP 1 352 776 B1**
(45) Veröffentlichungstag und Bekanntmachung des Hinweises auf die Patenterteilung: **10.08.2005**
(21) Anmeldenummer: 02008085.9
(22) Anmeldetag: 11.04.2002
(51) Int. Cl.: B60L 5/20

(54) **Stromabnehmer**
Current collector
Collecteur de courant

(43) Veröffentlichungstag der Anmeldung: 15.10.2003
(73) Patentinhaber: Fahrleitungsbau GmbH, D-45329 Essen (DE)
(72) Erfinder: Dorlöchter, Michael, 44807 Bochum (DE); Krause, Achim, 59394 Nordkirchen (DE)
(74) Vertreter: Rohmann, Michael, Dr.

(56) Entgegenhaltungen:
- DE-A- 19 755 215
- GB-A- 295 392
- GB-A- 323 994
- US-A- 1 334 943

## Beschreibung

Die Erfindung betrifft einen Stromabnehmer für eine Schleifleitungsstromschiene mit einem Basisgehäuse, Schleifarmen und Schleifkontakten. - Stromabnehmer dieser Art sind mit zumindest zwei Schleifkontakten ausgerüstet, um auch bei gekrümmten Schleifleitungsstromschienen eine sichere Stromabnahme zu gewährleisten.

Bei einem aus der Praxis bekannten Stromabnehmer der vorgenannten Art sind die beiden Schleifkontakte an ein einziges starres Gehäuse angeschlossen, welches Gehäuse wiederum über Schleifarme, vorzugsweise über ein Parallelogrammgestänge schwenkbar an einem Basisgehäuse befestigt ist. Bei diesem bekannten Stromabnehmer werden die aus Unebenheiten der Schleifleitungsstromschiene resultierenden Beanspruchungen, insbesondere Stoßbeanspruchungen bzw. Prallbeanspruchungen, die auf einen Schleifkontakt einwirken, stets auf das gleiche starre Gehäuse übertragen und somit wird auch der zweite Schleifkontakt stets mitbeeinflusst. Dies kann dazu führen, dass ein funktionssicherer Kontakt zwischen Schleifkontakten und Schleifleitungsstromschienen nicht immer gewährleistet ist.

Aus der US 1 334 943 kennt man einen Stromabnehmer mit zwei Schleifgehäusen, die jeweils schwenkbar an Schleifarmen gelagert sind, wobei diese Schleifarme wiederum ebenfalls schwenkbar an weiteren Armen bzw. Trägern gelagert sind. Die Schleifgehäuse selbst sind unabhängig voneinander gelagert.

Schließlich kennt man einen Stromabnehmer für eine Schleifleistungsstromschiene mit einer um eine Schwenkachse verschwenkbar und in Richtung der Schwenkachse hin- und herbewegbar gelagerten Schleifkontaktstückeaufnahme, in der hintereinander zumindest zwei Schleifkontaktstücke aus einem elektrischleitenden Material jeweils um eine zur Schwenkachse senkrechte Lagerachse im Klemmsitz auf einer Schwenklagerung gehalten sind (vgl. DE 197 55 215 A1).

Der Erfindung liegt das technische Problem zugrunde, einen Stromabnehmer der eingangs genannten Art anzugeben, bei dem die vorstehend erläuterten Nachteile effektiv vermieden werden.

Zur Lösung dieses technischen Problems lehrt die Erfindung einen Stromabnehmer für eine Schleifleitungsstromschiene, - mit einem Basisgehäuse, zwei mit dem Basisgehäuse verbundenen Schleifarmen und zwei an die Schleifarme angeschlossenen Schleifgehäusen mit Schleifkontakt,
wobei jeder Schleifarm bei der Überführung von einer Ruhestellung in eine Arbeitsstellung um eine erste Schwenkachse gegen die Kraft einer Feder zum Basisgehäuse hin schwenkbar ist,
wobei jedes Schleifgehäuse gegenüber dem zugeordneten Schleifarm um einen senkrecht zur Bewegungsrichtung des Stromabnehmers angeordnete zweite Schwenkachse schwenkbar ist
und wobei die beiden Schleifgehäuse untereinander verbindungsfrei ausgebildet sind, dadurch gekennzeichnet, dass
lediglich eine an einem Stirnende eines Schleifgehäuses vorgesehene Nase in eine an einem Stirnende des anderen Schleifgehäuses vorgesehene Tasche lose einfasst.

In der Ruhestellung des Stromabnehmers bzw. in der Ruhestellung der Schleifarme sind die Schleifarme vollständig ausgeschwenkt bzw. ausgeklappt. In der Arbeitsstellung des Stromabnehmers bzw. in der Arbeitsstellung der Schleifarme sind die Schleifarme gegen die Kraft der Federn zum Basisgehäuse geschwenkt und die Schleifkontakte liegen somit gleichsam unter Vorspannung an der Schleifleitungsstromschiene an. - Bewegungsrichtung des Stromabnehmers bezieht sich auf die Bewegung des Stromabnehmers entlang der Schleifleitungsstromschiene. Die beiden Schleifarme und die beiden Schleifgehäuse sind in Bewegungsrichtung des Stromabnehmers hintereinander angeordnet.

Dass die beiden Schleifgehäuse untereinander verbindungsfrei ausgebildet sind, meint im Rahmen der Erfindung, dass keine starre mechanische Verbindung zwischen den beiden Schleifgehäusen verwirklicht ist. Es liegt weiterhin im Rahmen der Erfindung, dass die beiden Schleifgehäuse auch nicht unmittelbar durch eine Kabelverbindung aneinander angeschlossen sind. Erfindungsgemäß fasst lediglich die Nase des einen Schleifgehäuses in die Tasche des anderen Schleifgehäuses lose ein. Loses Einfassen meint, dass die Nase aus der Tasche herausziehbar ist.

Nach sehr bevorzugter Ausführungsform der Erfindung ist in dem Basisgehäuse ein elektrischer Anschlusskontakt vorgesehen, welcher Anschlusskontakt über jeweils eine elektrisch leitende Verbindung einerseits mit dem Schleifkontakt des ersten Schleifgehäuses und andererseits mit dem Schleifkontakt des zweiten Schleifgehäuses verbunden ist. Der Anschlusskontakt dient dem elektrisch leitenden Anschluss an eine Tragschiene an der der Stromabnehmer befestigt ist. Die elektrisch leitenden Verbindungen sind zweckmäßigerweise als flexible Verbindungen, bevorzugt als Kabelverbindungen ausgeführt. Es liegt im Rahmen der Erfindung, dass jede elektrisch leitende Verbindung mit einem lösbaren Stecker am Anschlusskontakt angeschlossen ist. Es liegt fernerhin im Rahmen der Erfindung, dass jede elektrisch leitende Verbindung durch einen lösbaren Stecker am zugeordneten Schleifgehäuse angeschlossen ist. Nach der vorgenannten bevorzugten Ausführungsform der Erfindung sind also zwei separate elektrisch leitende Verbindungen zwischen jeweils einem Schleifkontakt bzw. Schleifgehäuse und dem Anschlusskontakt vorgesehen. Die beiden Schleifgehäuse sind also nicht unmittelbar über eine elektrisch leitende Verbindung miteinander verbunden.

Vorzugsweise weisen die beiden Schleifarme basisgehäuseseitig jeweils eine Zentriernase auf, welche Zentriernase in Ruhestellung des Stromabnehmers in eine Zentriertasche des Basisgehäuses mit der Maßgabe einfasst, dass in diesem Zustand eine Schwenkbarkeit des jeweiligen Schleifarms um eine vertikale dritte Schwenkachse eingeschränkt ist. Einschränkung der Schwenkbarkeit meint hier, dass die Schwenkung des jeweiligen Schleifarms um die vertikale dritte Schwenkachse entweder nicht möglich ist oder zumindest behindert ist. Es liegt im Rahmen der Erfindung, dass die vertikale dritte Schwenkachse senkrecht zur Bewegungsrichtung des Stromabnehmers angeordnet ist. Bei der am Basisgehäuse vorgesehenen Zentriertasche handelt es sich vorzugsweise um eine nach oben, d. h. zum Schleifgehäuse hin offene Nut. Zweckmäßigerweise ist die Zentriertasche als V-förmige Nut ausgeführt. In der Ruhestellung des Stromabnehmers ist nach der vorgenannten Ausführungsform eine Verschwenkung der Schleifarme bzw. der Schleifgehäuse um die vertikalen dritten Schwenkachsen eingeschränkt. Dadurch werden die Schleifarme bzw. die Schleifgehäuse in der Ruhestellung einfach und effektiv zentriert.

Nach bevorzugter Ausführungsform der Erfindung ist bei der Überführung eines Schleifarmes aus der Ruhestellung in die Arbeitsstellung und bei entsprechender Schwenkung dieses Schleifarmes um die zugeordnete erste Schwenkachse zum Basisgehäuse hin die Zentriernase aus der Zentriertasche ausschwenkbar, so dass in dieser Arbeitsstellung der jeweilige Schleifarm um die vertikale dritte Schwenkachse schwenkbar ist. Diese Verschwenkung ist in der Arbeitsstellung für jeden der beiden Schleifarme möglich. Die Schwenkung um die vertikale dritte Schwenkachse ist aber nur in Arbeitsstellung realisierbar. In der Ruhestellung der Schleifarme bzw. in der Ruhestellung des Stromabnehmers findet mittels der in die Zentriertasche eingreifenden Zentriernase die Zentrierung der Schleifgehäuse statt.

Zweckmäßigerweise liegen die beiden Schleifgehäuse in der Ruhestellung des Stromabnehmers mit ihren Stirnenden unmittelbar aneinander an. Die Nase des einen Schleifgehäuses fasst dabei vollständig in die Tasche des anderen Schleifgehäuses ein. Die beiden Schleifgehäuse sind in dieser Ruhestellung vorzugsweise exakt fluchtend hintereinander angeordnet. Mittels der in die Tasche einfassenden Nase wird auf diese Weise eine sehr effektive Zentrierung der Schleifgehäuse bzw. Schleifkontakte in der Ruhestellung erzielt. - Die Schleifgehäuse bestehen zweckmäßigerweise aus Kunststoff. Die Schleifkontakte werden vorzugsweise in einer entsprechenden Ausnehmung der Schleifgehäuse gehalten. Die Länge eines Schleifkontaktes in Bewegungsrichtung des Stromabnehmers beträgt vorzugsweise mehr als 40 mm, bevorzugt mehr als 45 mm.

Es liegt im Rahmen der Erfindung, dass die Nase des einen Schleifgehäuses bei Überführung in eine Arbeitsstellung und bei entsprechender Schwenkung beider Schleifarme um die erste Schwenkachse zum Basisgehäuse hin, unter Vergrößerung des Abstandes zwischen beiden Schleifgehäusen aus der Tasche des anderen Schleifgehäuses herausziehbar ist. In einer Arbeitsstellung des Stromabnehmers liegen also die beiden Schleifgehäuse nicht mehr unmittelbar aneinander an sondern weisen einen Abstand voneinander auf, der durch entsprechende Schwenkung der beiden Schleifarme zum Basisgehäuse hin vergrößert werden kann. Es liegt aber im Rahmen der Erfindung, dass in jeder Arbeitsstellung die Nase zumindest teilweise bzw. zumindest mit ihrer Spitze noch in die Tasche einfasst. Auf diese Weise wird gewährleistet, dass bei Überführung in die Ruhestellung des Stromabnehmers stets eine Zentrierung der beiden Schleifgehäuse bzw. Schleifkontakte durch die in die Tasche einfassende Nase erzielt wird. Nach sehr bevorzugter Ausführungsform der Erfindung ist die Nase sich zu ihrer Spitze hin verjüngend ausgebildet.

Zweckmäßigerweise weist das Basisgehäuse an seiner Oberfläche Anschlusselemente für den Anschluss an eine Tragschiene auf. Dabei handelt es sich vorzugsweise um Rastelemente zum Verrasten des Stromabnehmers an der Tragschiene oder um Steckelemente zum Aufstecken des Stromabnehmers auf die Tragschiene. An einer Tragschiene können in der Regel mehrere Stromabnehmer nebeneinander angeordnet werden.

Der Erfindung liegt die Erkenntnis zugrunde, dass mit der erfindungsgemäßen Ausbildung des Stromabnehmers das eingangs erläuterte technische Problem effektiv gelöst werden kann. Eine aus einer Unebenheit der Schleifleitungsstromschiene resultierende mechanische Beanspruchung, insbesondere Prallbeanspruchung, die auf einen Schleifkontakt einwirkt, wird bei der erfindungsgemäßen Ausbildung nicht mehr ohne weiteres auf den anderen Schleifkontakt übertragen. Mit dem erfindungsgemäßen Stromabnehmer wird ein sehr funktionssicherer Kontakt zur Schleifleitungsstromschiene gewährleistet. Der Erfindung liegt weiterhin die Erkenntnis zugrunde, dass in der Ruhestellung des Stromabnehmers eine einfache und effektive Zentrierung der Schleifgehäuse bzw. der daran angeschlossenen Schleifkontakte möglich ist. Vorzugsweise wird eine Zentrierung bezüglich drei Raumebenen verwirklicht. Dabei liegt es im Rahmen der Erfindung, dass alle Zentrierungen mit Hilfe von Nase-/Tasche-Ausbildungen verwirklicht werden. Die Zentrierung wird durch die an den Schleifarmen vorgesehenen Federn unterstützt bzw. findet unter dem Einfluss dieser Federn statt. Der erfindungsgemäße Stromabnehmer zeichnet sich im Übrigen durch einen einfachen und wenig aufwändigen Aufbau aus und ist deshalb auch einfach und kostengünstig herstellbar.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht eines erfindungsgemäßen Stromabnehmers in Ruhestellung,
- Fig. 2: den Gegenstand nach Fig. 1 bei der Überführung in eine Arbeitsstellung,
- Fig. 3: den Gegenstand nach Fig. 1 in einer Arbeitsstellung,
- Fig. 4: einen Ausschnitt des Gegenstandes nach Fig. 1 aus Richtung des Pfeiles A,
- Fig. 5: einen Ausschnitt des Gegenstandes gemäß Fig. 1 aus Richtung des Pfeiles B und
- Fig. 6: den Gegenstand nach Fig. 1 ausschnittsweise in einer Ansicht aus Richtung des Pfeiles C.

Die Figuren zeigen einen erfindungsgemäßen Stromabnehmer für eine nicht dargestellte Schleifleitungsstromschiene. Der Stromabnehmer weist ein Basisgehäuse 1, zwei mit dem Basisgehäuse 1 verbundene Schleifarme 2, 3 und zwei an die Schleifarme 2, 3 angeschlossene Schleifgehäuse 4, 5 auf. Jedes Schleifgehäuse 4, 5 ist mit einem Schleifkontakt 6, 7 ausgerüstet, welcher Schleifkontakt den elektrischen Kontakt mit einer nicht dargestellten Schleifleitungsstromschiene herstellt. In dem Basisgehäuse 1 ist ein elektrischer Anschlusskontakt 8 vorgesehen, welcher Anschlusskontakt 8 vorzugsweise und im Ausführungsbeispiel über jeweils eine Kabelverbindung 26 einerseits mit dem Schleifkontakt 6 des ersten Schleifgehäuses 4 und andererseits mit dem Schleifkontakt 7 des zweiten Schleifgehäuses 5 verbunden ist. Es handelt sich um flexible Kabelverbindungen 26, die jeweils an jeder Seite einen Stecker 9, 10 aufweisen, mit denen sie lösbar am Schleifgehäuse 4, 5 bzw. lösbar am Basisgehäuse 1 befestigt sind. Erfindungsgemäß werden also zwei separate elektrisch leitende Verbindungen zwischen dem Basisgehäuse 1 und den Schleifgehäusen 4, 5 verwirklicht. In den Figuren ist erkennbar, dass die beiden Schleifgehäuse 4, 5 bzw. die beiden Schleifkontakte 6, 7 nicht unmittelbar durch eine elektrisch leitende Verbindung miteinander verbunden sind.

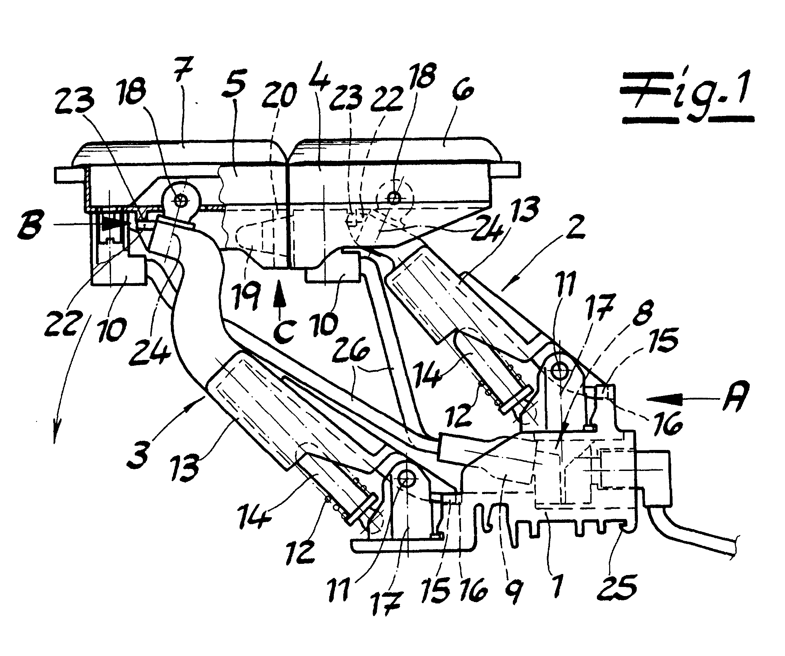

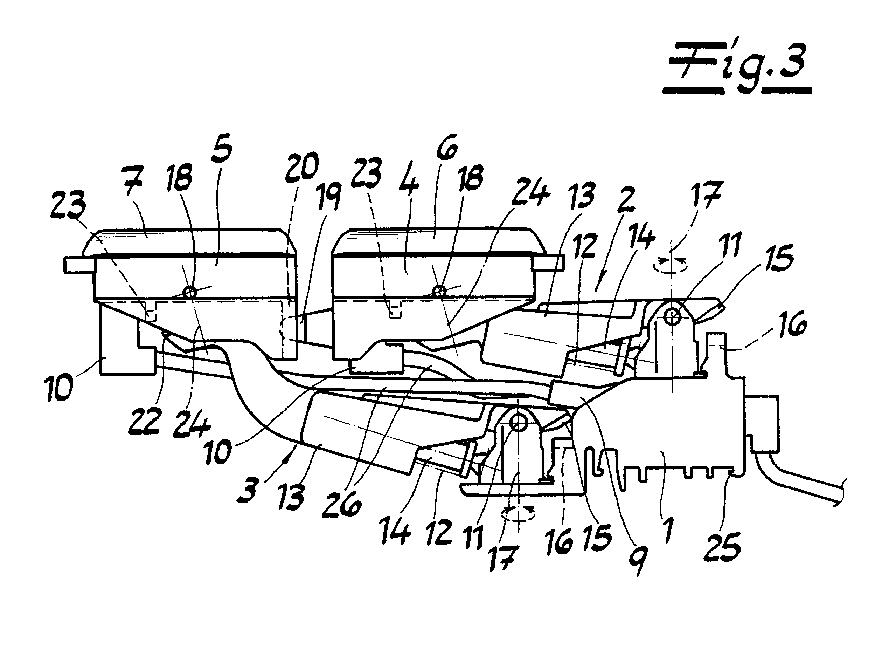

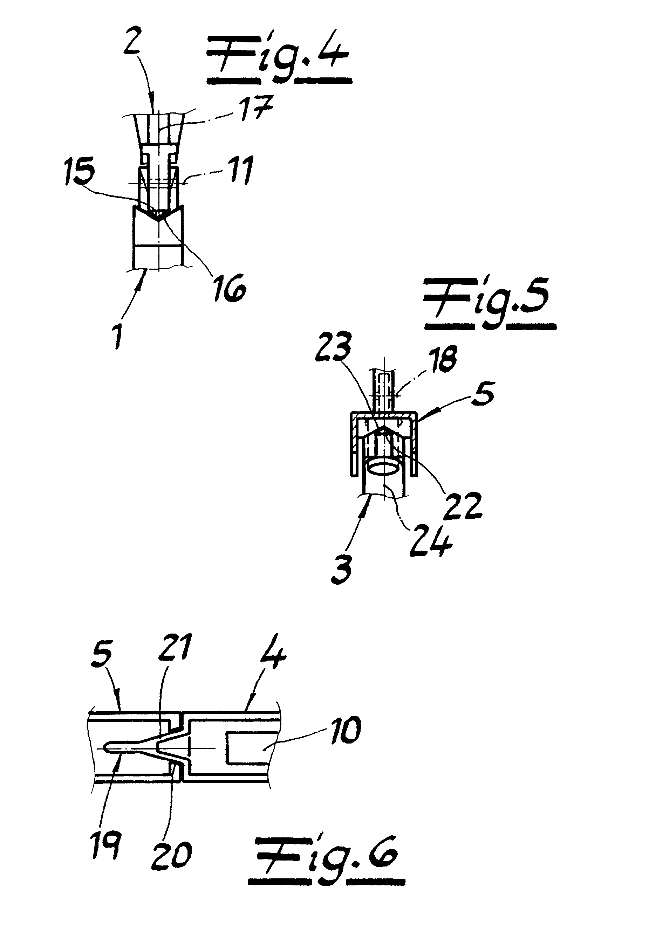

Jeder der beiden Schleifarme 2, 3 ist bei der Überführung von einer Ruhestellung (Fig. 1) in eine Arbeitsstellung (Fig. 3) um eine erste Schwenkachse 11 gegen die Kraft einer Feder 12 zum Basisgehäuse 1 hin schwenkbar. Diese Schwenkmöglichkeit ist in Fig. 1 durch einen ausgezogenen Pfeil verdeutlicht worden. Die Feder 12 stützt sich einerseits in einer Aufnahmehülse 13 eines Schleifarmes 2, 3 ab und andererseits an einem Kopplungselement 14 des Basisgehäuses 1. Jeder Schleifarm 2, 3 weist basisgehäuseseitig jeweils eine Zentriernase 15 auf, welche Zentriernase 15 in Ruhestellung (Fig. 1 und Fig. 4) des Stromabnehmers in eine Zentriertasche 16 des Basisgehäuses 1 mit der Maßgabe einfasst, dass eine Schwenkbarkeit des jeweiligen Schleifarmes 2, 3 um eine vertikale dritte Schwenkachse 17 eingeschränkt ist. Die Zentriertasche 16 ist im Ausführungsbeispiel als nach oben offene V-förmige Nut ausgebildet (Fig. 4). Bei der Überführung eines Schleifarmes 2, 3 aus der Ruhestellung (Fig. 1) in die Arbeitsstellung (Fig. 3) und bei entsprechender Schwenkung dieses Schleifarmes 2, 3 um die zugeordnete erste Schwenkachse 11 zum Basisgehäuse 1 hin, ist die Zentriernase 15 aus der Zentriertasche 16 ausschwenkbar, so dass in dieser Arbeitsstellung (Fig. 3) der Schleifarm 2, 3 um die vertikale dritte Schwenkachse 17 schwenkbar ist. Das ist in der Fig. 3 durch einen gestrichelten Pfeil angedeutet worden. In der Ruhestellung (Fig. 1) werden also durch das Eingreifen der Zentriernasen 15 in die Zentriertaschen 16 die Schleifarme 2, 3 und die daran angeschlossenen Schleifgehäuse 4, 5 bzw. Schleifkontakte 6, 7 effektiv zentriert.

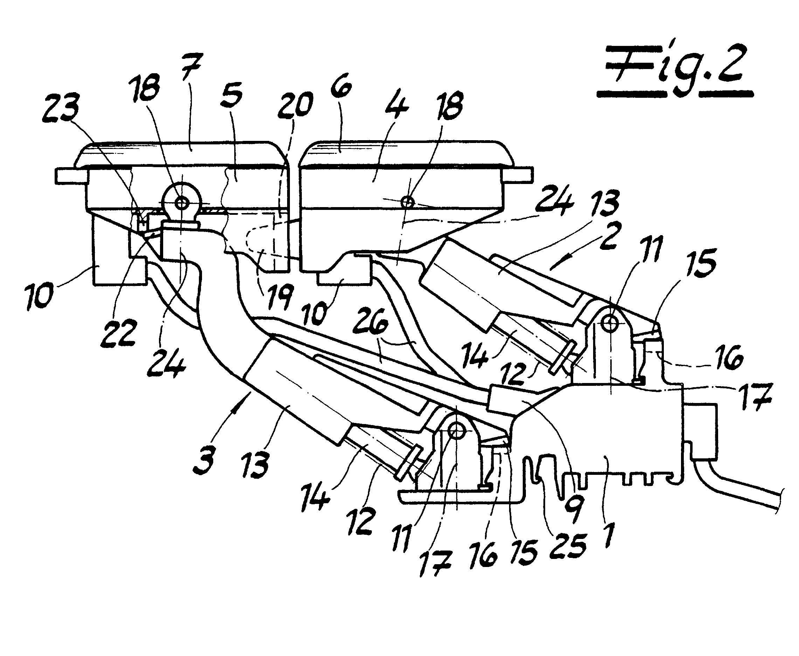

Jedes Schleifgehäuse 4, 5 ist gegenüber dem zugeordneten Schleifarm 2, 3 um eine senkrecht zur Bewegungsrichtung des Stromabnehmers angeordnete zweite Schwenkachse 18 schwenkbar. - Die Fig. 1 bis 3 zeigen, dass die beiden Schleifgehäuse 4, 5 erfindungsgemäß untereinander verbindungsfrei ausgebildet sind und dass lediglich eine an einem Stirnende eines Schleifgehäuses 4 vorgesehene Nase 19 in eine an einem Stirnende des anderen Schleifgehäuses 5 vorgesehene Tasche 20 lose einfasst. In der Fig. 1 ist erkennbar, dass die beiden Schleifgehäuse 4, 5 in der Ruhestellung des Stromabnehmers mit ihren Stirnenden unmittelbar aneinander anliegen. In dieser Ruhestellung fasst die Nase 19 vollständig in die Tasche 20 ein. Die Nase 19 des ersten Schleifgehäuses 4 ist bei Überführung in die Arbeitsstellung und bei entsprechender Schwenkung beider Schleifarme 2, 3 um die erste Schwenkachse 11 zum Basisgehäuse 1 hin unter Vergrößerung des Abstandes zwischen beiden Schleifgehäusen 4, 5 aus der Tasche 20 des zweiten Schleifgehäuses 5 herausziehbar. Diese Abstandsvergrößerung zwischen den beiden Schleifgehäusen 4, 5 zeigt eine vergleichende Betrachtung der Fig. 1, 2 und 3. Auch in der Arbeitsstellung (Fig. 3) greift die Nase 19 nichtsdestoweniger teilweise bzw. mit ihrer Spitze noch in die Tasche 20 ein. Auf diese Weise wird stets gewährleistet, dass die Schleifgehäuse 4, 5 gleichsam fluchtend hintereinander angeordnet bleiben. Aufgrund der in die Tasche 20 einfassenden Nase 19 wird ebenfalls eine effektive Zentrierung der Schleifgehäuse 4, 5 bzw. der daran angeschlossen Schleifkontakte 6, 7 erzielt. Die Überführung in den zentrierten Zustand der Ruhestellung wird unterstützt durch die Kraft der Federn 12, die die beiden Schleifarme 2, 3 stets in Richtung Ruhestellung zurückdrücken.

Es liegt im Rahmen der Erfindung, dass die Nase 19 sich zu ihrer Spitze hin verjüngend ausgebildet ist. Dabei verjüngt sich die Nase 19 sowohl in ihrer Seitenansicht (Fig. 1 bis 3) zu ihrer Spitze hin als auch in ihrer Draufsicht (Fig. 6). In Fig. 6 ist erkennbar, dass der sich verjüngende Abschnitt 21 der Nase 19 formschlüssig in die Tasche 20 des zweiten Schleifgehäuses 5 einfasst. Die Tasche 20 ist im Ausführungsbeispiel zum Basisgehäuse 1 hin, offen ausgebildet.

Vorzugsweise und im Ausführungsbeispiel ist an einem Ende jedes Schleifarmes 2, 3 eine weitere Nase 22 vorgesehen, die jeweils in der Ruhestellung (Fig. 1) in eine zugeordnete weitere Tasche 23 einfasst. In dieser Ruhestellung, in der die weitere Nase 22 in die weitere Tasche 23 einfasst, wird eine Verschwenkung des jeweiligen Schleifgehäuses 4, 5 um eine vierte Schwenkachse 24 eingeschränkt. Die weitere Nase 22 wird bei dem Übergang aus der Ruhestellung (Fig. 1) in die Arbeitsstellung (Fig. 3) bei entsprechender Schwenkung des jeweiligen Schleifarmes 2, 3 um die erste Schwenkachse 11 zum Basisgehäuse hin aus der weiteren Tasche 23 ausgeschwenkt, so dass in diese Arbeitsstellung (Fig. 3) das jeweilige Schleifgehäuse 4, 5 um die vierte Schwenkachse 24 schwenkbar ist. Auch mit der weiteren Nase 22 und der zugeordneten weiteren Tasche 23 wird in der Ruhestellung eine effektive Zentrierung der Schleifgehäuse 4, 5 bzw. der zugeordneten Schleifkontakte 2, 6 erreicht.

In den Fig. 1 bis 3 ist erkennbar, dass nach bevorzugter Ausführungsform der Erfindung das Basisgehäuse 1 an seiner Oberfläche Anschlusselemente 25 für den Anschluss an eine nicht dargestellte Tragschiene aufweist. Die Anschlusselemente dienen beispielsweise der Verwirklichung einer Rastverbindung zwischen Basisgehäuse 1 und Tragschiene.

## Patentansprüche

1. Stromabnehmer für eine Schleifleitungsstromschiene, - mit einem Basisgehäuse (1), zwei mit dem Basisgehäuse (1) verbundenen Schleifarmen (2, 3) und zwei an die Schleifarme (2, 3) angeschlossenen Schleifgehäusen (4, 5) mit Schleifkontakt (6, 7),
wobei jeder Schleifarm (2, 3) bei der Überführung aus einer Ruhestellung in eine Arbeitsstellung um eine erste Schwenkachse (11) gegen die Kraft einer Feder (12) zum Basisgehäuse (1) hin schwenkbar ist,
wobei jedes Schleifgehäuse (4, 5) gegenüber dem zugeordneten Schleifarm (2, 3) um eine senkrecht zur Bewegungsrichtung des Stromabnehmers angeordnete zweite Schenkachse (18) schwenkbar ist
und wobei die beiden Schleifgehäuse (4, 5) untereinander verbindungsfrei ausgebildet sind, **dadurch gekennzeichnet, dass**
lediglich eine an einem Stirnende eines Schleifgehäuses (4, 5) vorgesehene Nase (19) in eine an einem Stirnende des anderen Schleifgehäuses (4, 5) vorgesehene Tasche (20) lose einfasst.

2. Stromabnehmer nach Anspruch 1, wobei in dem Basisgehäuse (1) ein elektrischer Anschlusskontakt (8) vorgesehen ist, welcher Anschlusskontakt (8) über jeweils eine elektrisch leitende Verbindung einerseits mit dem Schleifkontakt (6) des ersten Schleifgehäuses (4) und andererseits mit dem Schleifkontakt (7) des zweiten Schleifgehäuses (5) verbunden ist.

3. Stromabnehmer nach einem der Ansprüche 1 oder 2, wobei die Schleifarme (2, 3) basisgehäuseseitig jeweils eine Zentriernase (15) aufweisen, welche Zentriernase (15) in Ruhestellung des Stromabnehmers in eine Zentriertasche (16) des Basisgehäuses (1) mit der Maßgabe einfasst, dass eine Schwenkbarkeit des jeweiligen Schleifarmes (2, 3) um eine vertikale dritte Schwenkachse (17) eingeschränkt ist.

4. Stromabnehmer nach Anspruch 3, wobei bei der Überführung eines Schleifarmes (2, 3) aus der Ruhestellung in die Arbeitsstellung und bei entsprechender Schwenkung dieses Schleifarmes (2, 3) um die zugeordnete erste Schwenkachse (11) zum Basisgehäuse (1) hin, die Zentriernase (15) aus der Zentriertasche (16) ausschwenkbar ist, so dass in dieser Arbeitsstellung der Schleifarm (2, 3) um die vertikale dritte Schwenkachse (17) schwenkbar ist.

5. Stromabnehmer nach einem der Ansprüche 1 bis 4, wobei die beiden Schleifgehäuse (4, 5) in der Ruhestellung des Stromabnehmers mit ihren Stirnenden unmittelbar aneinander anliegen.

6. Stromabnehmer nach einem der Ansprüche 1 bis 5, wobei die Nase (19) des einen Schleifgehäuses (4, 5) bei Überführung in eine Arbeitsstellung und bei Schwenkung beider Schleifarme (2, 3) um die erste Schwenkachse (11) zum Basisgehäuse (1) hin unter Vergrößerung des Abstandes zwischen beiden Schleifgehäusen (4, 5) aus der Tasche (20) des anderen Schleifgehäuses (4, 5) herausziehbar ist.

7. Stromabnehmer nach einem der Ansprüche 1 bis 6, wobei die Nase (19) sich zu ihrer Spitze hin verjüngend ausgebildet ist.

8. Stromabnehmer nach einem der Ansprüche 1 bis 7, wobei das Basisgehäuse (1) an seiner Oberfläche Anschlusselemente (25) für den Anschluss an eine Tragschiene aufweist.

## Claims

1. A current collector for a sliding-contact current-collecting rail, with a base housing (1), two sliding arms (2, 3) connected to the base housing (1) and two sliding housings (4, 5) with sliding contact (6, 7) connected to the sliding arms (2, 3),
whereby each sliding arm (2, 3), when it is transferred from a rest position into a working position about a first swivelling axis (11), can be swivelled against the force of a spring (12) towards the base housing (1),
whereby each sliding housing (4, 5) can be swivelled, with respect to the assigning sliding arm (2, 3), about a second swivelling axis (18) arranged normal to the direction of motion of the current collector
and whereby the two sliding housings (4, 5) are designed free from connection with respect to one another, **characterised in that**
only a nose (19) provided at an end face of the sliding housing (4, 5) fits loosely into a pocket (20) provided at an end face of the other sliding housing (4, 5).

2. The current collector according to claim 1, whereby there is provided in the base housing (1) an electrical terminal contact (8), which terminal contact (8) is connected in each case via an electrically conducting connection on the one hand to the sliding contact (6) of the first sliding housing (4) and on the other hand to the sliding contact (7) of the second sliding housing (5).

3. The current collector according to any one of claims 1 or 2, whereby the sliding arms (2, 3) each have on the base-housing side a centring nose (15), which centring nose (15) fits in the rest position of the current collector into a centring pocket (16) of the base housing (1), such that a swivelling capacity of the respective sliding arm (2, 3) about a vertical third swivelling axis (17) is restricted.

4. The current collector according to claim 3, whereby, when a sliding arm (2, 3) is transferred from the rest position into the working position and the sliding arm (2, 3) is correspondingly swivelled about the assigned first swivelling axis (11) towards the base housing (1), the centring nose (15) can be swivelled out of the centring pocket (16), so that, in this working position, the sliding arm (2, 3) can be swivelled about the vertical third swivelling axis (17).

5. The current collector according to any one of claims 1 to 4, whereby the two sliding housings (4, 5) directly abut against one another with their end faces in the rest position of the current collector.

6. The current collector according to any one of claims 1 to 5, whereby the nose (19) of one sliding housing (4, 5), upon transfer into a working position and swivelling of the two sliding arms (2, 3) about the first swivelling axis (11) towards the base housing (1), can be slid out of the pocket (20) of the other sliding housing (4, 5) thereby enlarging the distance between the two sliding housings (4, 5) .

7. The current collector according to any one of claims 1 to 6, whereby the nose (19) is designed tapering towards its tip.

8. The current collector according to any one of claims 1 to 7, whereby the base housing (1) has on its surface connection elements (25) for the connection to a mounting rail.

## Revendications

1. Collecteur de courant pour un rail de contact de ligne de contact, comprenant un boîtier de base (1), deux bras de contact (2, 3) reliés au boîtier de base (1) et deux boîtiers de contact (4, 5) avec frotteur (6, 7) raccordés aux bras de contact (2, 3),
chaque bras de contact (2, 3) étant, lors du passage d'une position de repos à une position de travail, pivotable autour d'un premier axe de pivotement (11) à l'encontre de la force d'un ressort (12) vers le boîtier de base (1),
chaque boîtier de contact (4, 5) étant pivotable par rapport au bras de contact (2, 3) associé autour d'un deuxième axe de pivotement (18) perpendiculaire au sens du déplacement du collecteur de courant et
les deux boîtiers de contact (4, 5) étant réalisés sans liaison entre eux, **caractérisé en ce que**
uniquement une pièce mâle (19) prévue à une extrémité frontale d'un boîtier de contact (4, 5) s'engage de manière amovible dans une pièce femelle (20) prévue à une extrémité frontale de l'autre boîtier de contact (4, 5).

2. Collecteur de courant selon la revendication 1, un contact de raccordement électrique (8) étant prévu dans le boîtier de base (1), lequel contact de raccordement (8) est relié, par l'intermédiaire de respectivement une liaison électriquement conductrice, d'une part, au frotteur (6) du premier boîtier de contact (4) et, d'autre part, au frotteur (7) du deuxième boîtier de contact (5).

3. Collecteur de courant selon l'une des revendications 1 ou 2, les bras de contact (2, 3) comportant respectivement, côté boîtier de base, une pièce mâle de centrage (15) qui, en position de repos du collecteur de courant, s'engage dans une pièce femelle de centrage (16) du boîtier de base (1), étant entendu qu'une possibilité de pivotement du bras de contact (2, 3) respectif autour d'un troisième axe vertical de pivotement (17) est limitée.

4. Collecteur de courant selon la revendication 3, la pièce mâle de centrage (15), lors du passage d'un bras de contact (2, 3) de la position de repos à la position de travail et étant donné un pivotement correspondant de ce bras de contact (2, 3) autour du premier axe de pivotement (11) associé vers le boîtier de base (1), pouvant pivoter hors de la pièce femelle de centrage (16) de sorte que, dans cette position de travail, le bras de contact (2, 3) est pivotable autour du troisième axe vertical de pivotement (17).

5. Collecteur de courant selon l'une des revendications 1 à 4, les deux boîtiers de contact (4, 5) étant directement adjacents l'un à l'autre en leurs extrémités frontales dans la position de repos du collecteur de courant.

6. Collecteur de courant selon l'une des revendications 1 à 5, la pièce mâle (19) d'un boîtier de contact (4, 5), lors du passage à une position de travail et étant donné un pivotement des deux bras de contact (2, 3) autour du premier axe de pivotement (11) vers le boîtier de base (1), étant retirable de la pièce femelle (20) de l'autre boîtier de contact (4, 5) avec augmentation de l'écart entre les deux boîtiers de contact (4, 5).

7. Collecteur de courant selon l'une des revendications 1 à 6, la pièce mâle étant réalisée de manière telle qu'elle s'effile en direction de sa pointe.

8. Collecteur de courant selon l'une des revendications 1 à 7, le boîtier de base (1) comportant, sur sa surface, des éléments de raccordement (25) pour le raccordement à un rail porteur.
